# EUROPEAN PATENT SPECIFICATION

(11) **EP 2 361 750 B1**
(45) Date of publication and mention of the grant of the patent: **08.11.2017**
(21) Application number: 11153213.1
(22) Date of filing: 03.02.2011
(51) Int. Cl.: B29C 65/52, A41H 43/04, D06H 5/00, B05C 11/10, B65D 83/00, A41D 27/24

(54) **Cloth bonding apparatus and cartridge**
Vorrichtung zum Verbinden von Stoff und Kartusche
Appareil de liaison de tissus et cartouche

(30) Priority: 18.02.2010 JP 2010033257
(43) Date of publication of application: 31.08.2011
(73) Proprietor: Brother Kogyo Kabushiki Kaisha, Nagoya-shi, Aichi 467-8561 (JP)
(72) Inventor: Enya, Tetsuji, Nagoya-shi Aichi 467-8562 (JP); Iwakoshi, Hiroyasu, Nagoya-shi Aichi 467-8562 (JP); Umeda, Kazutoshi, Nagoya-shi Aichi 467-8562 (JP); Nishimura, Kazuto, Nagoya-shi Aichi 467-8562 (JP); Nemoto, Yoshimitsu, Nagoya-shi Aichi 467-8562 (JP); Yamaura, Hiroki, Nagoya-shi Aichi 467-8562 (JP); Minagawa, Yuichiro, Nagoya-shi Aichi 467-8562 (JP)
(74) Representative: Prüfer & Partner mbB Patentanwälte · Rechtsanwälte

(56) References cited:
- EP-A1- 2 233 277
- EP-A1- 2 255 955
- WO-A1-2006/132428
- WO-A2-2007/037865
- DE-U1- 8 022 593
- DE-U1- 20 103 911
- US-A1- 2004 050 963

## Description

### BACKGROUND

The present invention relates to a cloth bonding apparatus and a cartridge.

A cloth bonding apparatus is directed for bonding cloths with an adhesive instead of sewing the cloths with a needle and a thread. The cloth surfaces sewn by the thread have unevenness thereon due to the thread appearing on the cloth surfaces. By bonding the cloths with the adhesive, the bonding apparatus can eliminate the unevenness. The cloth surfaces processed by the bonding apparatus are smooth. Thus, the cloth bonding apparatus is capable of manufacturing clothes and the like which are free from discomfort when touched with the skin.

The cloth bonding apparatus discharges a liquid adhesive from a nozzle and applies it onto a cloth. A worker lays another cloth on top of the cloth on which the adhesive has been applied. The bonding apparatus presses the cloths together to thereby bond the cloths to each other.

With the apparatus described in Japanese Patent Application Laid-Open Publication No. 2006-150228, a storage chamber houses therein a cartridge for storing a fluent material. The apparatus supplies a gas into the cartridge and thus pushes the fluid material out of the cartridge. The storage chamber housing the cartridge therein has an opening on its top and the cloth bonding apparatus is provided with a cap for covering the opening. An O-ring made of an elastic body such as rubber is provided between the cap and the storage chamber. The cloth bonding apparatus is provided with the O-ring, thereby preventing the gas supplied inside the cartridge from leaking to the outside.

### SUMMARY

The cloth bonding apparatus heats an adhesive inside the cartridge housed in the storage chamber and supplies it to a nozzle. In the above apparatus, the adhesive is heated so that a heat is applied to the O-ring provided between the cap and the storage chamber, and thus the O-ring may gradually deteriorate and deform. In the cloth bonding apparatus, when the O-ring deteriorates and deforms, the gas supplied inside the cartridge may leak to the outside. In the cloth bonding apparatus, it is difficult to hold a pressure of the gas supplied inside the cartridge constant when the gas leaks to the outside.

WO 2007/037865 A2 discloses a generic cloth bonding apparatus according to the preamble of claim 1.

WO 2006/132428 A1 discloses a generic cartridge according to the preamble of claim 5.

Other cartridges are known from US 2004/050963 A1; DE 201 03 911 U1; and DE 80 22 5963 U1.

It is an object of the present invention to provide a cloth bonding apparatus and a cartridge capable of reliably preventing a gas supplied inside the cartridge from leaking to the outside and holding a pressure of the gas supplied inside the cartridge constant.

This object is achieved by the cloth bonding apparatus having the features of claim 1 and by the cartridge having the features of claim 5.

The cloth bonding apparatus according to the present invention includes a storage chamber that includes an opening and that is adapted to detachably house a cartridge storing an adhesive. The cloth bonding apparatus also includes a nozzle, an adhesive channel through which the adhesive stored in the cartridge can be supplied to the nozzle, a cover portion that is provided to the storage chamber and that is capable of opening/closing the opening, and a gas supply port that is formed in the cover portion and through which a gas can be supplied from a pressure source to the cartridge housed inside the storage chamber. A pressure holding member that is provided in the cartridge contacts a surrounding portion of the gas supply port of the cover portion and tightly seals a gas channel of the gas toward the cartridge when the cartridge is housed in the storage chamber and the opening is closed by the cover portion.

In the cloth bonding apparatus, the cartridge is provided with the pressure holding member. The pressure holding member can contact the surrounding portion of the gas supply port of the cover portion when the cover portion closes the opening, and tightly seal the gas channel. The pressure holding member is provided in the cartridge. When the cartridge is to be replaced, the pressure holding member can be replaced together with the cartridge. Thus, since the pressure holding member can be replaced each time the cartridge is replaced, the pressure holding member can be prevented from deteriorating and deforming. The cloth bonding apparatus can prevent the leakage of the gas due to the deterioration of the pressure holding member. Therefore, the cloth bonding apparatus can hold the pressure of the gas supplied inside the cartridge.

In the cloth bonding apparatus, an elastic material may be provided on at least one of a first surface and a second surface. The first surface may be a surface of the pressure holding member that contacts the cover portion. The second surface may be a surface of the cover portion that contacts the pressure holding member. In this case, the elastic material elastically deforms when the cover portion closes the opening. Thus, a pressure to be applied to the cartridge can be decreased. The cloth bonding apparatus can thus prevent the deformation of the cartridge.

In the cloth bonding apparatus, the elastic member may be provided on the first surface of the pressure holding member. In this case, the elastic material can be replaced together with the pressure holding member when the cartridge is replaced. Thus, the elastic material can be prevented from decreasing.

In the cloth bonding apparatus, the elastic material may be formed as a projection portion. In this case, the amount of elastic deformation can be increased due to the convex portion that occurs when the cover portion closes the opening. Therefore, the cloth bonding apparatus can seal the gas channel more tightly. The cloth bonding apparatus can thus hold the pressure of the gas supplied inside the cartridge.

The cartridge according to the present invention is usable in a cloth bonding apparatus, the cloth bonding apparatus that is adapted to detachably house a cartridge storing an adhesive in a storage chamber, supply a gas to the cartridge via a gas supply port provided in a cover portion that closes the storage chamber, and discharge the adhesive from the cartridge to bond cloths. The cartridge includes a throughhole formation portion that is positioned opposite to the gas supply port when the cartridge is housed in the storage chamber, and a pressure holding member that surrounds the throughhole formation portion and that contacts with the cover portion when the cover portion closes an opening of the storage chamber.

The cartridge has the throughhole formation portion a surface that is opposite to the cover portion (i.e. the surface on the cover portion side). The pressure holding member surrounds the throughhole formation portion on the surface of the cartridge on the cover portion side. When the cover portion closes the opening, the pressure holding member can contact the cover portion to tightly seal the surrounding of the gas supply port on a surface of the cover portion and on the surface of the cartridge on the cover portion side. Since the pressure holding member is provided in the cartridge on the surface on the cover portion side, when it is used in the cloth bonding apparatus, the pressure holding member can be replaced together with the cartridge when the cartridge is replaced. Thus, the pressure holding member can be prevented from deteriorating. The cartridge can prevent the leakage of the gas flowing toward the cartridge due to the deterioration of the pressure holding member. Therefore, when the cartridge is housed in the storage chamber, the cartridge can reliably guide the gas flowing toward the inside of the cartridge. When the cartridge is housed in the storage chamber, the cartridge can hold the pressure of the gas supplied inside the cartridge.

In the cartridge, an elastic material may be provided on a surface of the pressure holding member that contacts the cover portion. In this case, the elastic material elastically deforms when the cover portion closes the opening, and thus the pressure to be applied to the cartridge can be decreased. Therefore, when the cartridge is housed in the storage chamber, the deformation of the cartridge can be prevented by means of the elastic material.

In the cartridge, the elastic material may be formed as a projection portion. In this case, the amount of elastic deformation can be increased due to the convex portion that occurs when the cover portion closes the opening. Thus, the cartridge can seal the gas channel more tightly. The cartridge can thus hold the pressure of the gas supplied inside the cartridge.

### BRIEF DESCRIPTION OF THE DRAWINGS

Exemplary embodiments will be described below in detail with reference to the accompanying drawings in which:
FIG. 1 is a perspective view of an entire cloth bonding apparatus 1;
FIG. 2 is a perspective view of a bonding machine 2;
FIG. 3 is a front view of the bonding machine 2;
FIG. 4 is a left side view of the bonding machine 2;
FIG. 5 is a perspective view of the internal configuration of the bonding machine 2;
FIG. 6 is a cross sectional view taken along line I-I of FIG. 2;
FIG. 7 is a cross sectional view taken along line I-I of FIG. 2;
FIG. 8 is a front view of a cartridge 60;
FIG. 9 is a perspective view of the cartridge 60;
FIG. 10 is a cross sectional view taken along line II-II of FIG. 2;
FIG. 11 is a cross sectional view taken along line III-III of FIG. 2; and
FIG. 12 is a partially enlarged perspective view of the vicinity of a nozzle 17 during a bonding work.
FIG. 13 is an enlarged partial cross sectional view of a modified example that corresponds to FIG. 6.

### DETAILED DESCRIPTION OF THE EXEMPLARY EMBODIMENTS

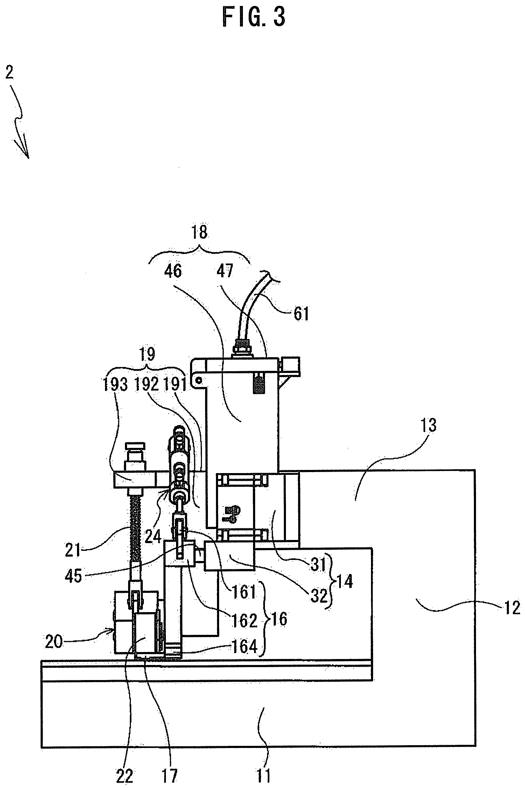

A cloth bonding apparatus 1 according to the present invention will be described below with reference to the drawings. In the following description, it is defined that the upper side, the lower side, the right side, the left side, the front face side, and the back face side of a bonding machine 2 shown in Fig. 3 are the upper side, the lower side, the right side, the left side, the front side, and the back side of the bonding machine 2, respectively.

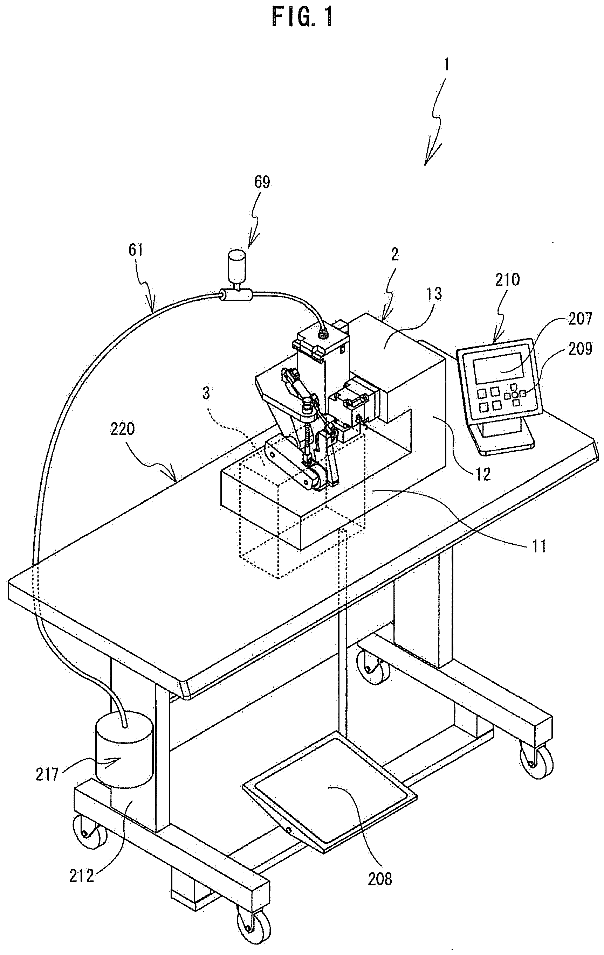

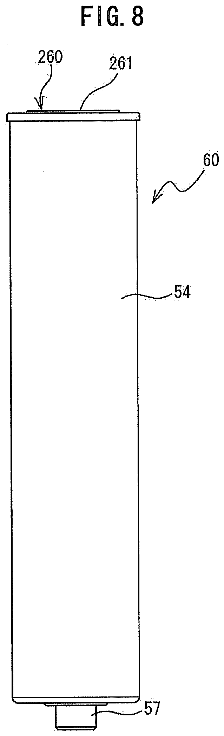

A configuration of the cloth bonding apparatus 1 will be described with reference to Fig. 1. The cloth bonding apparatus 1 includes the bonding machine 2 and a cartridge 60 (see Fig. 8). The bonding machine 2 is fixed on a table 220. The bonding machine 2 applies an adhesive between two layers of cloths arranged oppositely, and presses and feeds the cloths. The two layers of cloths are bonded together through the above operation of the bonding machine 2. A configuration of the bonding machine 2 will be described later in detail.

The table 220 has an operation panel 210 on the right side of the bonding machine 2. The operation panel 210 includes a display portion 207 and a plurality of keys 209. The display portion 207 displays various items of information thereon. The keys 209 are directed for inputting various items of information. A worker may set various operations of the cloth bonding apparatus 1 by operating the keys 209 while looking at the display portion 207. The table 220 rotatably supports a pedal 208 at the lower end. The pedal 208 is used to adjust a cloth feed speed.

The table 220 includes a control box 3 at a position opposite to the bonding machine 2. The control box 3 stores a control board having a CPU (not shown) and the like mounted thereon. The control box 3 is electrically connected to the bonding machine 2, the operation panel 210, and the pedal 208.

A compressor 217 is provided on the left side of a leg 212 of the table 220. The compressor 217 has a substantially cylindrical shape with the up-and-down direction as the longitudinal direction. One end of a hose 61 is connected to the top of the compressor 217. The other end of the hose 61 is connected to a storage chamber 18 of the bonding machine 2. The hose 61 is provided with a valve 69. The compressor 217 feeds a gas to the storage chamber 18 through the hose 61. The valve 69 controls the flow of the gas to be supplied inside the storage chamber 18 by the compressor 217 to switch between a gas supply state and a gas shield state.

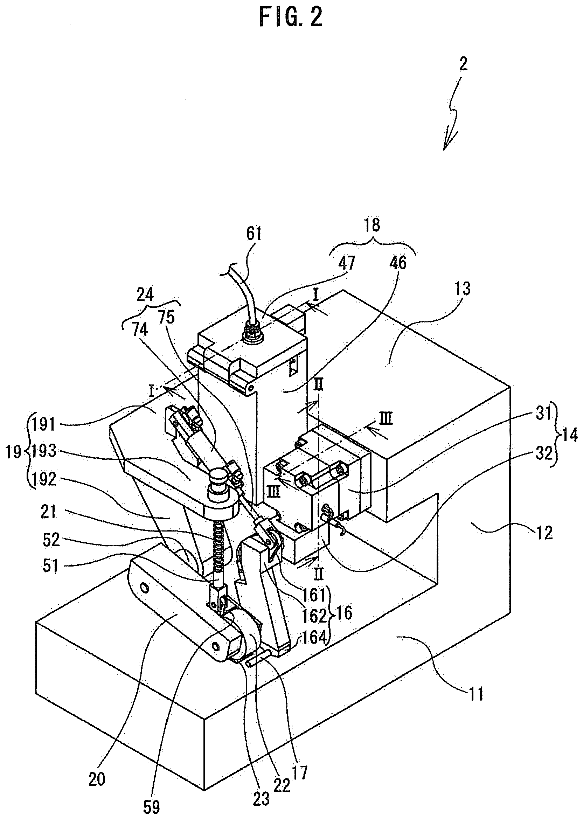

The configuration of the bonding machine 2 will be described with reference to Figs. 2 to 4. As shown in Figs. 2 and 3, the bonding machine 2 includes a bed portion 11, a pillar portion 12, and an arm portion 13. The bed portion 11 has a substantially rectangular parallelepiped shape. The pillar portion 12 extends vertically upwards from the right end of the bed portion 11. The arm portion 13 is connected to the upper end of the pillar portion 12 and extends leftward from the left side of the pillar portion 12.

The bed portion 11 functions as a base that supports the pillar portion 12. The pillar portion 12 supports the arm portion 13. The left end of the arm portion 13 supports a pump casing 14, the storage chamber 18, and a beam portion 19, from front to back in this order.

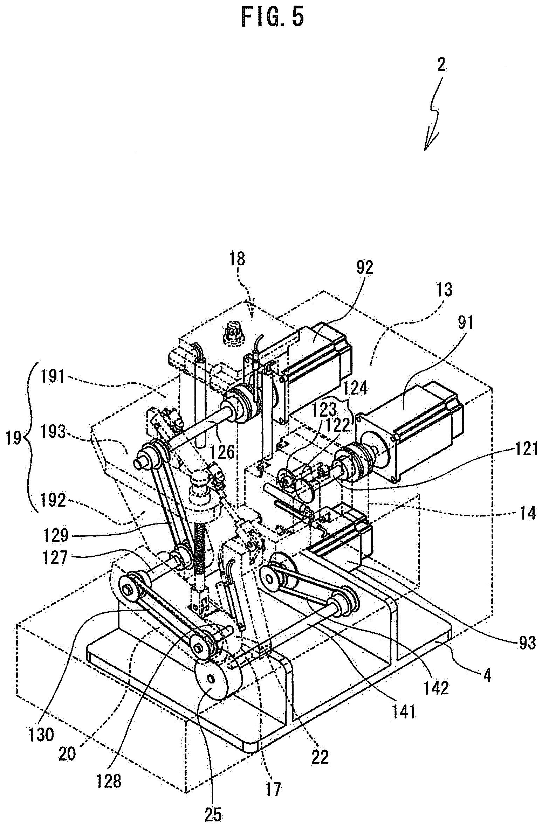

The pump casing 14 will be described. As shown in Figs. 2 and 3, the pump casing 14 includes a first pump casing 31 and a second pump casing 32. The first pump casing 31 is a substantially cubic member. The first pump casing 31 is fixed on the left side face of the arm portion 13. The first pump casing 31 includes therein a gear pump 124 (see Fig. 5). The gear pump 124 supplies an appropriate amount of the adhesive to a nozzle 17 with high accuracy. The second pump casing 32 is a substantially rectangular parallelepiped member. The second pump casing 32 extends downward from the left end portion of the lower face of the first pump casing 31.

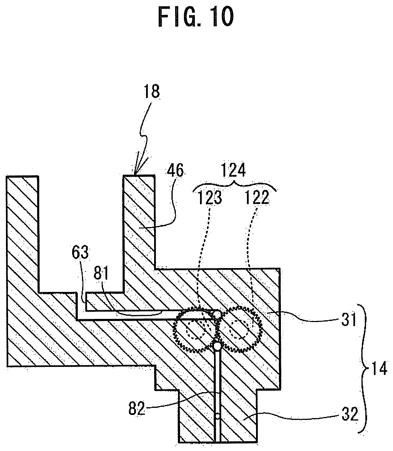

The second pump casing 32 includes a shaft portion 45 (see Fig. 3) on its left side. The shaft portion 45 is connected to the right side of an upper end 162 of a support portion 16 and swingably supports the support portion 16. The pump casing 14 includes a channel 81 (see Fig.10) and a channel 82 (see Fig. 10), which will be described later. The first channel 81 leads the adhesive from the storage chamber 18 to the gear pump 124. The second channel 82 leads the adhesive from the gear pump 124 to the support portion 16.

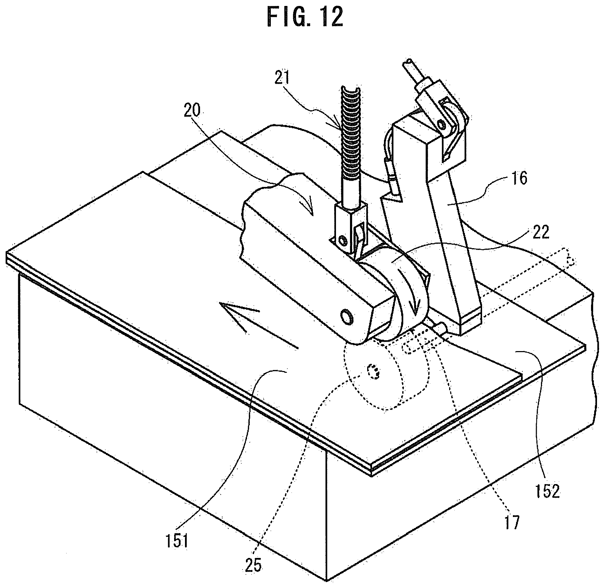

As shown in Figs. 2 and 3, the support portion 16 has a substantially rectangular parallelepiped shape. A small gap is present between a lower end 164 of the support portion 16 and the bed portion 11. The support portion 16 includes the nozzle 17 at the lower end 164. The nozzle 17 extends leftward from the support portion 16. The support portion 16 includes a drive transmitting portion 161 at the upper end 162. The drive transmitting portion 161 supports a movable portion 75 of an air cylinder 24. The support portion 16 swings back and forth about the shaft portion 45 along with the back-and-forth movement of the movable portion 75 of the air cylinder 24. The nozzle 17 moves along with the swing of the support portion 16 to a position where a bonding work is performed (a use portion, see Fig.12) and to a position where maintenance is performed (a maintenance portion).

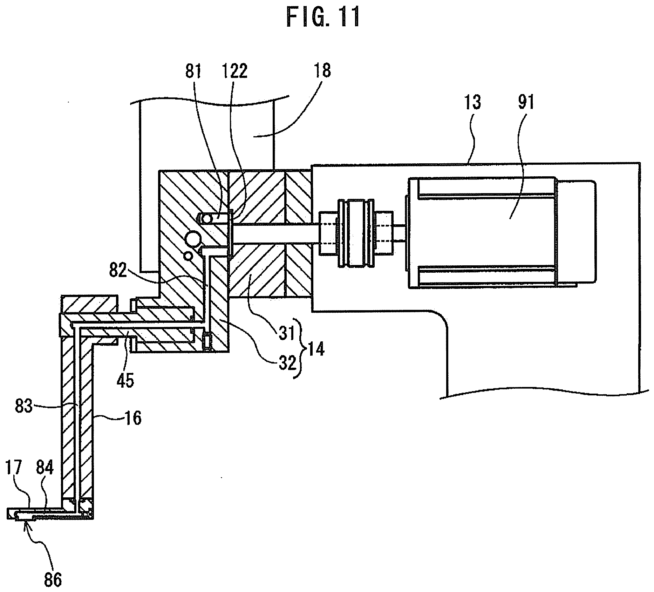

The nozzle 17 has a cylindrical shape. The nozzle 17 has a discharge port 86 (see Fig.11) from which the adhesive is discharged. In a case where the worker performs a bonding work, the discharge port 86 opposes the bed portion 11. In a case where the worker performs the bonding work, the worker inserts the nozzle 17 between the two layers of oppositely arranged cloths. The gear pump 124 (see Fig.5) supplies the adhesive to the nozzle 17 through a channel 83 (see Fig. 11) provided inside the support portion 16. The nozzle 17 discharges the adhesive from the discharge port onto the cloth. The adhesive may be applied on the surface of the lower cloth positioned below the nozzle 17.

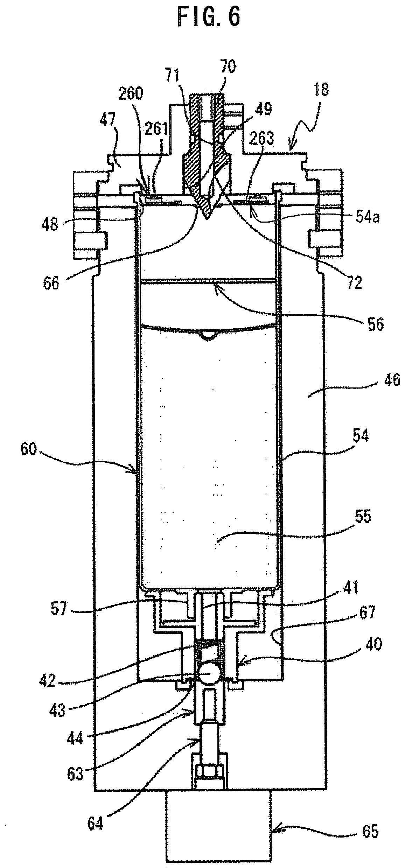

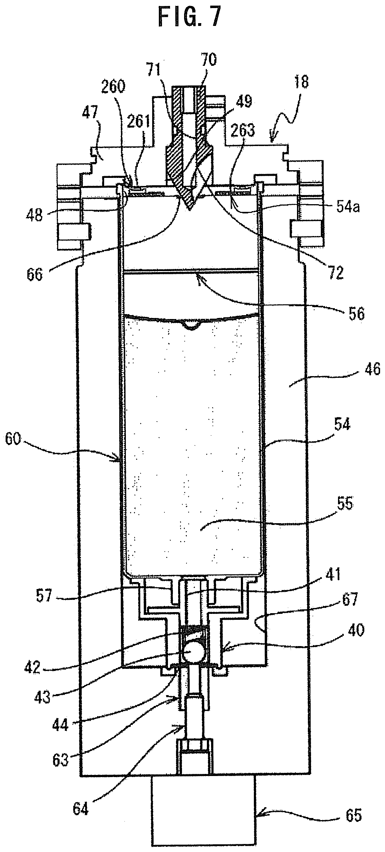

As shown in Figs. 2 and 3, the storage chamber 18 has a substantially rectangular parallelepiped shape. The storage chamber 18 extends upward from the left side of the arm portion 13 and from the back of the pump casing 14. The storage chamber 18 includes a body portion 46 and a cover portion 47. The body portion 46 has a bottomed tube shape having an opening 48 (see Fig.6) at the top. The cover portion 47 covers the opening 48 (see Fig.6 and Fig.7) at the top of the body portion 46. The storage chamber 18 houses the cartridge 60, in which a hot-melt adhesive (not shown) is stored, inside the body portion 46. The storage chamber 18 supplies the adhesive stored in the cartridge 60 to the gear pump 124 and the nozzle 17 as needed. The hot-melt adhesive melts when heated to a predetermined temperature, and solidifies at a temperature below the predetermined temperature. The storage chamber 18 is provided with a heater and the heater heats and melts the adhesive inside the cartridge 60.

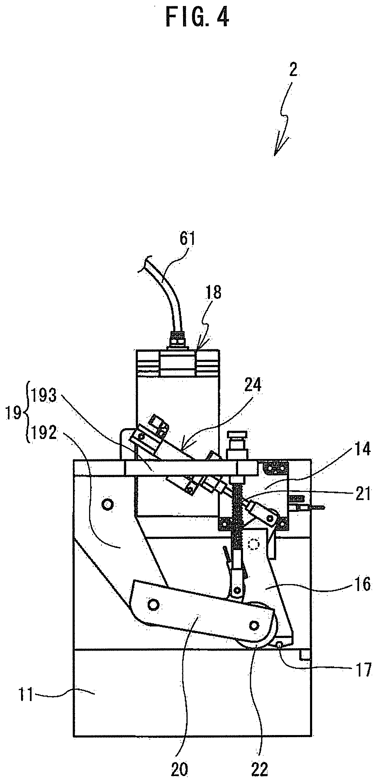

As shown in Fig. 2, the beam portion 19 includes a body portion 191, a spring support portion 193, and a column portion 192. The body portion 191 is a member extending horizontally leftward from the rear left end of the arm portion 13. The spring support portion 193 has a plate shape and extends horizontally forward from the left end portion of the body portion 191. As shown in Figs. 2 and 4, the column portion 192 extends obliquely downward from the body portion 191 at about 45 degrees relative to the horizontal plane. There is a gap between the lower end of the column portion 192 and the bed portion 11.

As shown in Fig. 2, the spring support portion 193 has a hole at the front end portion. The spring support portion 193 supports a shaft portion 51 in a vertically movable manner. The shaft portion 51 is inserted through a spring 21. The upper end portion of the shaft portion 51 is inserted through the hole of the spring support portion 193.

The column portion 192 has a shaft portion 52 extending horizontally leftward from the lower end part thereof. The shaft portion 52 supports a rear end portion of a roller holding portion 20. The roller holding portion 20 may swing a front end portion in the vertical direction with the shaft portion 52 as the center of swing. The body portion 191 is provided with the air cylinder 24 at the right side of the spring support portion 193.The air cylinder 24 is directed for switching the position of the support portion 16.

The front end portion of the roller holding portion 20 rotatably supports an upper feed roller 22 having a cylindrical shape. The upper feed roller 22 is positioned in the vicinity of the back of the nozzle 17. The roller holding portion 20 includes a shaft support portion 59 on the upper face of the front portion. The shaft support portion 59 supports the shaft portion 51. The spring 21 is interposed between the spring support portion 193 and the lower end of the shaft portion 51. The spring 21 urges the shaft portion 51 downwards, thereby urging the roller holding portion 20 connected to the shaft portion 51 downwards.

The inner configuration of the bonding machine 2 will be described below with reference to Fig. 5. The bonding machine 2 includes therein a first motor 91, a second motor 92, a third motor 93, and the like.

The first motor 91 transmits a rotation drive force to the gear pump 124 via a rotary shaft 121 thereby driving the gear pump 124. The gear pump 124 includes a drive gear 122 and a driven gear 123. The drive gear 122 is fixed at the left end of the rotary shaft 121. The drive gear 122 rotates along with the rotary shaft 121. The driven gear 123 meshes with the drive gear 122. The first motor 91 is positioned inside the arm portion 13 and to the right side of the portion where the pump casing 14 is connected to the arm portion 13. The rotary shaft 121 extends inside the pump casing 14 leftward from the rotary shaft of the first motor 91. The drive gear 122 and the driven gear 123 supply an appropriate amount of the adhesive to the nozzle 17.

The second motor 92 transmits a rotation drive force to the upper feed roller 22 via rotary shafts 126, 127, 128 and belts 129, 130 thereby driving the upper feed roller 22. The second motor 92 is positioned inside the arm portion 13 and to the right side of the portion where the beam portion 19 is connected with the arm portion 13. The rotary shaft 126 extends leftward from the rotary shaft of the second motor 92 and extends through the body portion 191. The left end of the rotary shaft 126 is positioned inside the column portion 192. The left end of the rotary shaft 126 supports a pulley. The right end of the rotary shaft 127 is positioned inside the lower end of the column portion 192 and the left end of the rotary shaft 127 is positioned inside the rear end portion of the roller holding portion 20. The right end and left end of the rotary shaft 127 each support a pulley.

The rotary shaft 128 is a rotary shaft of the upper feed roller 22. The left end of the rotary shaft 128 is positioned inside the front end portion of the roller holding portion 20 and supports a pulley. The right end of the rotary shaft 128 projects from the front end portion of the roller holding portion 20 and supports the upper feed roller 22. The belt 129 is crossed between the pulley at the left end of the rotary shaft 126 and the pulley at the right end of the rotary shaft 127 inside the column portion 192. The belt 130 is crossed between the pulley at the left end of the rotary shaft 127 and the pulley at the left end of the rotary shaft 128 inside the roller holding portion 20. The upper feed roller 22 rotates along with the rotation of the second motor 92.

The third motor 93 transmits a rotation drive force to a lower feed roller 25 via a rotary shaft 141 and a belt 142 thereby driving the lower feed roller 25. The lower feed roller 25 is cylindrical and is fixed to the rotary shaft 141. The lower feed roller 25 is positioned below the upper feed roller 22 and inside the bed portion 11. The bed portion 11 has a support portion 4 therein. The support portion 4 rotatably supports the rotary shaft 141. The belt 142 is crossed between a pulley of a rotary shaft of the third motor 93 and a pulley at the right end of the rotary shaft 141 inside the bed portion 11. The lower feed roller 25 rotates along with the rotation of the third motor 93.

The storage chamber 18 will be described with reference to Figs. 6 and 7. The body portion 46 includes a bottom wall and a peripheral wall. A hole 67 is provided inside the body portion 46. The hole 67 has a substantially cylindrical shape. The cloth bonding apparatus 1 houses a cartridge 60, in which the adhesive is filled, in the hole 67. The cover portion 47 covers the upper opening 48 of the hole 67. The inside of the hole 67 is tightly sealed when the cover portion 47 covers the upper opening 48 (the cover portion 47 is closed).

A gas supply port 49 is provided at the center of the cover portion 47. The gas supply port 49 is a through hole vertically penetrating the cover portion 47. A needle-shaped member 70 is fitted within the gas supply port 49 of the cover portion 47. The needle-shaped member 70 has a substantially conical shape with a sharp tapered lower tip end. The needle-shaped member 70 is provided with a channel 71 that extend in the vertical direction and through which a gas from the compressor 217 is supplied. The needle-shaped member 70 is provided at its bottom with an arc-shaped groove 72. The groove 72 is connected to the lower end portion of the channel 71. The groove 72 allows the gas to flow from the compressor 217 to the inside of the hole 67.

An air cylinder 65 is provided below the body portion 46. The position of a piston inside the air cylinder 65 moves in accordance with an intake and an exhaust of a compressed air through the air inlet port (not shown). A pressing portion 64 is connected to the piston. The upper end of the pressing portion 64 moves in the vertical direction along with the movement of the piston. A hole 63 is provided at the center of the bottom of the hole 67. The upper part of the pressing portion 64 projects upward from the bottom of the hole 63. The channel 81 (see Fig. 10) that leads the adhesive to the pump casing 14 is connected to the hole 63.

As shown in Fig. 6, the upper end of the pressing portion 64 is below the bottom surface of the hole 67 when the pressing portion 64 moves downward. As shown in Fig. 7, the upper end of the pressing portion 64 slightly projects upward from the bottom surface of the hole 67 when the pressing portion 64 moves upward.

The cartridge 60 will be described with reference to Figs. 6 to 9. The cartridge 60 includes a body portion 54, an elastic member 260 and a reinforcing plate 263. The body portion 54 is made of aluminum. The reinforcing plate 263 is made of iron. Because the body portion 54 is made of aluminum, the cartridge 60 is lightweight. Therefore, the worker can easily replace the cartridge 60. The cartridge 60 has a coupling projection 57 at its bottom. A thread is formed in the coupling projection 57 so that the upper end portion of a valve 40 can be removably attached. Thus, by removing the valve 40 to replace only the body portion 54, the adhesive of the cartridge 60 can be replaced at low cost. The cartridge 60 is housed in the hole 67 with the valve 40 facing downward. The lower surface of the valve 40 contacts with the bottom face of the hole 67.

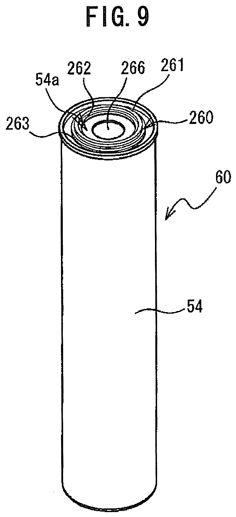

The body portion 54 has a substantially cylindrical shape. The diameter of the body portion 54 is substantially the same as the diameter of the hole 67. The inside of the body portion 54 is filled with an adhesive 55. The body portion 54 has a supply side cover portion 54a on a side that faces the gas supply port 49 when the cartridge 60 is housed in the storage chamber 18 and the cover portion 47 is closed. The reinforcing plate 263 is provided on the supply side cover portion 54a. The reinforcing plate 263 is an annular (ring-like) plate. The supply side cover portion 54a has a throughhole formation portion 266 (see Fig.9) at the center of the circular-shaped reinforcing plate 263. The thickness of the supply side cover portion 54a varies between the throughhole formation portion 266 and a portion where the reinforcing plate 263 is formed.

The elastic member 260 is affixed on top of the reinforcing plate 263. The elastic member 260 has an annular (ring-like) shape having a hole 262 (see Fig.9) at its center. A difference between the outer diameter and the inner diameter of the ring of the elastic member 260 is smaller than a difference between the outer diameter and the inner diameter of the ring of the reinforcing plate 263. In the following, the difference between the outer diameter and the inner diameter of the ring is called "ring width." The elastic member 260 is provided with a projection portion 261 on its upper surface. The projection portion 261 is made of an elastic material. The projection portion 261 runs annularly along the ring of the elastic member 260. The projection portion 261 projects upward from the upper end of the cylindrical wall of the body portion 54 (see Fig. 8). When the cover portion 47 is closed, the projection portion 261 contacts the cover portion 47 in a surrounding portion of the gas supply port 49. When the cover portion 47 is closed, the projection portion 261 elastically deforms.

An inner cover 56 is provided inside the body portion 54. The inner cover 56 is downwardly movable inside the body portion 54 and contacts with the upper surface of the adhesive 55. The inner cover 56 moves downward to apply a downward pressure to the adhesive 55. The needle-shaped member 70 makes a hole 66 by the sharp tip end in the throughhole formation portion 266. The compressor 217 (see FIG. 1) feeds a gas into the body portion 54 through the hose 61 (see Fig.1). The gas presses the inner cover 56 downward. The inner cover 56 presses the adhesive 55 downward.

A passage 41 is provided in the valve 40. The passage 41 is a through hole that extends inside the valve 40 in the vertical direction. The upper end of the passage 41 is connected to the body portion 54. A hole 44 is provided at the lower end of the valve 40. The diameter of the hole 44 is smaller than the diameter of the passage 41. The lower end of the passage 41 is connected to the hole 44. The hole 44 is positioned above the hole 63 provided at the bottom surface of the hole 67 while the cartridge 60 is housed in the hole 67.

A sphere 43 and a spring 42 that urges the sphere 43 downward are provided inside the passage 41. The diameter of the sphere 43 is slightly smaller than the diameter of the passage 41. The diameter of the sphere 43 is about 1.5 times as large as the diameter of the hole 44. The spring 42 urges the sphere 43 downward. As shown in Fig. 6, the sphere 43 blocks the hole 44 from the inside of the passage 41.

A procedure of pushing the adhesive 55 stored in the cartridge 60 to the outside will be described with reference to FIGS. 6 and 7. As shown in FIG. 6, the operator houses the cartridge 60 inside the hole 67 of the storage chamber 18. The pressing portion 64 has been moved downward from the bottom face of the hole 67. The sphere 43 blocks the hole 44 of the valve 40. Thus, the adhesive 55 does not flow out of the cartridge 60 (see Fig. 6).

The operator closes the cover portion 47. The sharp tip end of the needle-shaped member 70 makes the hole 66 at the throughhole formation part 266 of the cartridge 60. The cover portion 47 is closed so that the elastic member 260 and the projection portion 261 elastically deform. Thus, the inside of the storage chamber 18 is tightly sealed. The horizontal surface of the projection portion 261 is smaller than the horizontal surface of the elastic member 260. Thus, the projection portion 261 more largely deforms than the elastic member 260. The reinforcing plate 263 is provided between the elastic member 260 and the upper surface of the body portion 54. The thickness of the top portion of the body portion 54 varies between the throughhole formation portion 266 and its surrounding. More specifically, the thickness of the top portion of the body portion 54 is smaller in the throughhole formation portion 266 than in its surrounding. When the cover portion 47 is closed, a pressing force is applied to the upper surface of the body portion 54 via the needle-shaped member 70, the elastic member 260 and the projection portion 261. Since a degree of the deformation of the reinforcing plate 263 due to the pressing force is small, the deformation of the surrounding of the throughhole formation portion 266 is small. Thus, a sufficient pressing force can be applied to the projection portion 261 and the elastic member 260, thereby reliably maintaining the tightly-sealed state by the projection portion 261 and the elastic member 260.

When the air cylinder 65 is driven to move the piston upward, the pressing portion 64 moves upward. As shown in FIG. 7, the pressing portion 64 moved upward from the bottom face of the hole 67 pushes the sphere 43 upward. A gap is created between the hole 44 of the valve 40 and the sphere 43. At the same time, the compressor 217 (see Fig. 1) feeds a gas into the body portion 54. The gas pushes the inner cover 56 in the cartridge 60 downward. The inner cover 56 presses the adhesive 55 downward. The adhesive 55 flows downward through the passage 41. The adhesive passes through the gap between the hole 44 and the sphere 43 and flows into the hole 63 out of the inside of the cartridge 60. The adhesive 55 flows into the channel 81 connected to the hole 63.

The channels for the adhesive will be described with reference to Figs. 10 and 11.

As shown in Fig. 10, the channel 81 connected to the hole 63 is a through hole that extends toward the pump casing 14 below of the bottom wall of the storage chamber 18 at the pump casing 14 side. The channel 81 is a passage that guides the adhesive that has flowed out from the cartridge 60 to the gear pump 124.

The channel 81 leads from the storage chamber 18 to the center of the inside of the first pump casing 31 of the pump casing 14. The channel 81 bends to the right at a right angle at the center of the first pump casing 31 (at the rear surface side of Fig. 10) and leads to the upper end of a portion where the drive gear 122 and the driven gear 123 are meshed with each other.

As shown in Fig. 11, the channel 82 is a passage that guides the adhesive that has passed through the gear pump 124 to the channel 83 of the support portion 16. The channel 82 extends leftward from the lower end of the portion where the drive gear 122 and the driven gear 123 (refer to Fig. 10) are meshed with each other. The channel 82 extending leftward bends downward, bends to the left at its lower end, passes through the shaft portion 45 and then leads to the channel 83 inside the support portion 16.

The channel 83 is a passage that guides the adhesive that has flowed through the channel 82 to the nozzle 17. The channel 83 extends from the upper end 162 to the lower end 164 inside the support portion 16 and leads to the channel 84 inside the nozzle 17.

The channel 84 is a passage that guides the adhesive that has flowed flowing through the channel 83 to the discharge port 86. The discharge port 86 is provided in the bottom left end portion of the nozzle 17. The channel 84 extends from the right end to the left end inside the nozzle 17 and is connected to the discharge port 86. The adhesive is discharged from the discharge port 86 to the outside.

There will be described how the adhesive flows from the storage chamber 18 via the pump casing 14 and the support portion 16 to the discharge port 86 of the nozzle 17 with reference to Figs. 10 and 11. The pressing portion 64 presses the sphere 43 upward and the adhesive flows out of the cartridge 60. The adhesive then flows through the channel 81 to the gear pump 124. The first motor 91 drives the drive gear 122 so that the drive gear 122 and the driven gear 123 rotate. The gear pump 124 feeds the liquid adhesive from the channel 81 toward the channel 82. The adhesive flows from the channel 82 toward the channel 83, leads to the channel 84, and is discharged from the discharge port 86 to the outside.

There will be described how the bonding machine 2 operates during the bonding operation of bonding an upper cloth 151 and a lower cloth 152 with reference to Fig. 12.

When performing the bonding operation, the bonding machine 2 moves the movable portion 75 (see Fig. 2) of the air cylinder 24 (see Fig. 2) ahead and moves the support portion 16 to the use position. The operator places the upper cloth 151 on the lower cloth 152. The operator places the nozzle 17 at a portion where the cloths are to be bonded. The upper feed roller 22 and the lower feed roller 25 sandwich the upper cloth 151 and the lower cloth 152 behind the nozzle 17.

The adhesive that has flowed from the cartridge 60 flows through the channel 81 to the gear pump 124. When the operator steps on and presses down the pedal 208, the gear pump 124 is driven. The gear pump 124 feeds the adhesive to the channels 82 to 84. The adhesive is discharged from the discharge port 86 of the nozzle 17. The adhesive discharged from the discharge port 86 adheres to the lower cloth 152. The upper feed roller 22 and the lower feed roller 25 rotate in which the upper cloth 151 and the lower cloth 152 are fed from front to back. The spring 21 urges the upper feed roller 22 downward. Thus, the upper feed roller 22 and the lower feed roller 25 press and bond the upper cloth 151 and the lower cloth 152 together.

As described above, the cartridge 60 is provided with the elastic member 260 that contacts the lower surface of the cover portion 47 when the cover portion 47 is closed. Since the lower surface of the cover portion 47 contacts with the projection portion 261 of the elastic member 260, the cloth bonding apparatus 1 can tightly seal the gas from the compressor 217 inside the channel 71. Thus, the cloth bonding apparatus 1 can reliably seal the inside of the storage chamber 18 tightly. Since the storage chamber 18 is tightly sealed, the cloth bonding apparatus 1 can hold the pressure of the gas supplied inside the cartridge 60. The cloth bonding apparatus 1 can feed an appropriate amount of adhesive to the gear pump 124 and discharge it from the nozzle 17.

The elastic member 260 elastically deforms when the cover portion 47 is closed. Since the elastic member 260 elastically deforms, the pressure to be applied to the cartridge 60 decreases. Thus, the cloth bonding apparatus 1 can prevent the deformation of the cartridge 60 when the cover portion 47 is closed.

The elastic member 260 is provided with the projection portion 261 on the surface (the upper surface) where the elastic member 260 contacts with the cover portion 47 when the cover portion 47 is closed. With the projection portion 261,when the cover portion 47 is closed, the amount of deformation by which the elastic chamber 260 elastically deforms further increases. The cloth bonding apparatus 1 can reliably seal the gas from the compressor 217 inside the channel 71 tightly. Thus, the cloth bonding apparatus 1 can reliably seal the inside of the storage chamber 18 tightly.

The present invention is not limited to the above embodiment and may be variously modified. In the above embodiment, the elastic member 260 is provided with the projection portion 261. Alternatively, the projection portion 261 may be provided on the cover portion 47. In such a case, since the elastic member 260 does not have the convex portion, the elastic member 260 can easily be provided. The projection portion 261 may be provided on both the elastic member 260 and the cover portion 47, as well as either on the elastic member 260 or on the cover portion 47. In such case as well, the cloth bonding apparatus 1 can reduce the pressure to be applied to the cartridge 60 when the cover portion 47 is closed. The cloth bonding apparatus 1 can thus prevent the deformation of the cartridge 60 when the cover portion 47 is closed.

The projection portion 261 is not essential and it may not be provided. In such case, since the elastic member 260 in not provided with the projection portion 261, the cloth bonding apparatus 1 can tightly seal the inside of the storage chamber 18 with a simple structure. Since the elastic member 260 elastically deforms, the pressure to be applied to the cartridge 60 decreases. The cloth bonding apparatus 1 can thus prevent the deformation of the cartridge 60 when the cover portion 47 is closed.

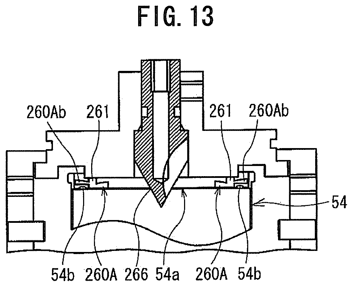

In the above embodiment, the cartridge 60 is provided with the iron reinforcing plate 263. The present invention is not limited thereto and the reinforcing plate 263 may be made of a metallic material other than iron, such as copper, stainless steel, and the like. The top portion of the body portion 54 of the cartridge 60 may be of one-plate structure and the thickness of the throughhole formation portion 266 only may be reduced instead of providing the reinforcing plate 263. Fig. 13 shows a modified example in which the reinforcing plate is not provided. The top portion of the body portion 54 (i.e. the supply side cover portion 54a) includes a reinforcing projection portion 54b, which is thicker than the throughhole formation portion 266, on the inner side of the outer circumference. The supply side cover portion 54a is shaped as a circular plate. The reinforcing projection portion 54b is formed in an annular shape. The reinforcing projection portion 54b can prevent the deformation of the supply side cover portion 54a when a hole is bored in the supply side cover portion 54a. The elastic member 260A includes an extending portion 260Ab that extends radially outward from the projection portion 261. The extending portion 260Ab is located in the close vicinity of the inner surface of the supply side cover portion 54a. The extending portion 260Ab is adapted to determine the position at which the elastic member 260A is affixed on the supply side cover portion 54a. Thus the center position of the supply side cover portion 54a substantially matches the center position of the elastic member 260A in every cartridge. Therefore, air tightness under the same conditions can be maintained even when the cartridge is replaced by a new one.

In the cloth bonding apparatus 1 according to the above embodiment, the width of the circle of the elastic member 260 is smaller than the ring width of the circle of the reinforcing plate 263 provided in the cartridge 60. The present invention is not limited thereto, and the ring width of the reinforcing plate 263 may be the same as that of the elastic member 260. In such a case, in the cloth bonding apparatus 1, the ring width of the elastic member 260 is increased, thereby increasing the contact area between the elastic member 260 and the cover portion 47. Thus, the cloth bonding apparatus 1 can reduce the pressure on the cartridge 60 when the cover portion 47 is closed. The cloth bonding apparatus 1 can thus prevent the deformation of the cartridge 60 when the cover portion 47 is closed.

In the above embodiment, the elastic member 260 has a substantially circular shape having the hole 262. The present invention is not limited thereto. For example, the elastic member 260 may take any shape including a hole 262, such as a substantially square shape or a substantially triangle shape, as long as the hole 262 is formed therein.

In the above embodiment, the cartridge 60 has the body portion 54 in a substantially cylindrical shape. The present invention is not limited thereto. For example, the body portion 54 may take any shape, such as a substantially prism-shaped box, as long as it can be filled with the adhesive 55.

In the above embodiment, the needle-shaped member 70 is attached to the cover portion 47 and the needle-shaped member 70 makes a hole at the throughhole formation portion 266 of the cartridge 60 when the cover portion 47 is closed. The needle-shaped member 70 is not essential for making a hole at the throughhole formation portion 266. The operator may use a tool to make a hole at the throughhole formation portion 266 before housing the cartridge 60 in the storage chamber 18. In such a case, the hose 61 may be connected to the gas supply port 49 of the cover portion 47.

In the above embodiment, the compressor 217 is attached to the table 220. The position of the compressor 217 is not limited to the table 220. When a pressure source is present in a plant, the hose 61 may be connected to the pressure source in the plant.

The channels 81, 82 of Fig. 7 and the channels 83, 84 of Fig. 10 correspond to the adhesive channel of the present invention. The elastic member 260 of Fig. 6 and 9 correspond to the pressure holding member of the present invention. The compressor 217 of Fig. 1 corresponds to the pressure source of the present invention.

## Claims

1. A cloth bonding apparatus comprising:
a cartridge (60) storing an adhesive therein;
a storage chamber (18) that includes an opening (48) and that is adapted to detachably house the cartridge (60);
a nozzle (17);
an adhesive channel (81, 82, 83) through which the adhesive stored in the cartridge can be supplied to the nozzle (17); and
a cover portion (47) that is provided to the storage chamber and that is capable of opening/closing the opening, **characterized by**
a gas supply port (49) that is formed in the cover portion and through which a gas can be supplied from a pressure source (217) to the cartridge housed inside the storage chamber,
wherein a pressure holding member (260) that is provided in the cartridge contacts a surrounding portion of the gas supply port of the cover portion and tightly seals a gas channel (71) of the gas toward the cartridge when the cartridge is housed in the storage chamber and the opening is closed by the cover portion.

2. The cloth bonding apparatus according to claim 1, wherein an elastic material is provided on at least one of a first surface and a second surface, the first surface being a surface of the pressure holding member that contacts the cover portion, and the second surface being a surface of the cover portion that contacts the pressure holding member.

3. The cloth bonding apparatus according to claim 2, wherein the elastic member is provided on the first surface of the pressure holding member.

4. The cloth bonding apparatus according to claim 2 or 3, wherein the elastic material is formed as a projection portion (261).

5. A cartridge that is usable in a cloth bonding apparatus (1), the cloth bonding apparatus (1) being adapted to detachably house a cartridge (60) storing an adhesive in a storage chamber (18), supply a gas to the cartridge through a gas supply port (49) provided in a cover portion that closes an opening of the storage chamber, and discharge the adhesive from the cartridge to bond cloths,
the cartridge comprises a portion (266) that is positioned opposite to the gas supply port when the cartridge is housed in the storage chamber, and a pressure holding member (260) that surrounds the portion (266) and that contacts the cover portion when the cover portion closes the opening of the storage chamber, the cartridge is **characterized in that**:
said portion (266) is a throughhole formation portion (266) in which a hole (66) can be made by a sharp tip end of a needle-shaped member (70) of the cloth bonding apparatus (1) to supply the gas to the cartridge through the gas supply port (49); wherein a thickness of the throughhole formation portion (266) is smaller than its surrounding.

6. The cartridge according to claim 5, further comprising an elastic material provided on a surface of the pressure holding member that contacts the cover portion.

7. The cartridge according to claim 6, wherein the elastic material is formed as a projection portion (261).

## Patentansprüche

1. Tuchfügegerät mit:
einer Kartusche (60), die darin ein Klebemittel speichert;
einer Speicherkammer (18), die eine Öffnung (48) aufweist, und die daran angepasst ist, die Kartusche (60) lösbar unterzubringen;
einer Düse (17);
einem Klebemittelkanal (81, 82, 83), durch den das in der Kartusche gespeicherte Klebemittel zu der Düse (17) zugeführt werden kann; und
einem Abdeckungsabschnitt (47), der an der Speicherkammer vorgesehen ist, und der in der Lage ist, die Öffnung zu öffnen/schließen,
**gekennzeichnet durch**
einen Gaszuführungsanschluss (49), der in dem Abdeckungsabschnitt ausgebildet ist, und durch den ein Gas von einer Druckquelle (217) zu der innerhalb der Speicherkammer untergebrachten Kartusche zugeführt werden kann,
wobei ein Druckhalteelement (260), das in der Kartusche vorgesehen ist, mit einem Umgebungsabschnitt des Gaszuführungsanschlusses des Abdeckungsabschnitts in Kontakt ist und einen Gaskanal (71) des Gases zu der Kartusche fest abdichtet, wenn die Kartusche in der Speicherkammer untergebracht ist und die Öffnung durch den Abdeckungsabschnitt geschlossen ist.

2. Tuchfügegerät gemäß Anspruch 1, wobei ein elastisches Material zumindest entweder an einer ersten Fläche oder einer zweiten Fläche vorgesehen ist, wobei die erste Fläche eine Fläche des Druckhalteelements ist, die mit dem Abdeckungsabschnitt in Kontakt ist, und wobei die zweite Fläche eine Fläche des Abdeckungsabschnitts ist, die mit dem Druckhalteelement in Kontakt ist.

3. Tuchfügegerät gemäß Anspruch 2, wobei das elastische Element an der ersten Fläche des Druckhalteelements vorgesehen ist.

4. Tuchfügegerät gemäß Anspruch 2 oder 3, wobei das elastische Material als ein Vorsprungsabschnitt (261) ausgebildet ist.

5. Kartusche, die bei einem Tuchfügegerät (1) verwendbar ist, wobei das Tuchfügegerät (1) daran angepasst ist, eine Kartusche (60), die ein Klebemittel speichert, in einer Speicherkammer (18) lösbar unterzubringen, ein Gas zu der Kartusche durch einen Gaszuführungsanschluss (49) zuzuführen, der in einem Abdeckungsabschnitt vorgesehen ist, der eine Öffnung der Speicherkammer schließt, und das Klebemittel von der Kartusche zum Fügen von Tüchern auszulassen,
wobei die Kartusche einen Abschnitt (266), der gegenüber dem Gaszuführungsanschluss positioniert ist, wenn die Kartusche in der Speicherkammer untergebracht ist, und ein Druckhalteelement (260) aufweist, das den Abschnitt (266) umgibt und mit dem Abdeckungsabschnitt in Kontakt ist, wenn der Abdeckungsabschnitt die Öffnung der Speicherkammer schließt, wobei die Kartusche **dadurch gekennzeichnet ist, dass**:
der Abschnitt (266) ein Durchgangslochausbildungsabschnitt (266) ist, in dem ein Loch (66) durch ein scharfes Spitzenende eines nadelförmigen Elements (70) des Tuchfügegeräts (1) geschaffen werden kann, um das Gas zu der Kartusche durch den Gaszuführungsanschluss (49) zuzuführen; wobei eine Dicke des Durchgangslochausbildungsabschnitts (266) kleiner ist als in seiner Umgebung.

6. Kartusche gemäß Anspruch 5, des Weiteren mit einem elastischen Material, das an einer Fläche des Druckhalteelements vorgesehen ist, das mit dem Abdeckungsabschnitt in Kontakt ist.

7. Kartusche gemäß Anspruch 6, wobei das elastische Material als ein Vorsprungsabschnitt (261) ausgebildet ist.

## Revendications

1. Appareil de liaison de tissus comprenant :
une cartouche (60) stockant un adhésif à l'intérieur de celle-ci ;
une chambre de stockage (18) qui comporte une ouverture (48) et qui est adaptée pour loger de manière détachable la cartouche (60) ;
une buse (17) ;
un canal d'adhésif (81, 82, 83) à travers lequel l'adhésif stocké dans la cartouche peut être acheminé jusqu'à la buse (17) ; et
une partie couvercle (47) qui est fournie à la chambre de stockage et qui est apte à ouvrir/fermer l'ouverture, **caractérisé par** :
un orifice d'alimentation en gaz (49) qui est formé dans la partie couvercle et à travers lequel un gaz peut être acheminé depuis une source de pression (217) vers la cartouche logée à l'intérieur de la chambre de stockage,
dans lequel un élément de maintien de pression (260) qui est prévu dans la cartouche est en contact avec une partie périphérique de l'orifice d'alimentation en gaz de la partie couvercle et ferme hermétiquement un canal de gaz (71) du gaz en direction de la cartouche lorsque la cartouche est logée dans la chambre de stockage et que l'ouverture est fermée par la partie couvercle.

2. Appareil de liaison de tissus selon la revendication 1, dans lequel un matériau élastique est fourni sur au moins l'une parmi une première surface et une seconde surface, la première surface étant une surface de l'élément de maintien de pression qui est en contact avec la partie couvercle, et la seconde surface étant une surface de la partie couvercle qui est en contact avec l'élément de maintien de pression.

3. Appareil de liaison de tissus selon la revendication 2, dans lequel l'élément élastique est prévu sur la première surface de l'élément de maintien de pression.

4. Appareil de liaison de tissus selon la revendication 2 ou 3, dans lequel le matériau élastique est formé sous forme d'une partie saillante (261).

5. Cartouche qui est utilisable dans un appareil de liaison de tissus (1), l'appareil de liaison de tissus (1) étant adapté pour loger de manière détachable une cartouche (60) stockant un adhésif dans une chambre de stockage (18), alimenter en gaz la cartouche par un orifice d'alimentation en gaz (49) prévu dans une partie couvercle qui ferme une ouverture de la chambre de stockage, et évacuer l'adhésif de la cartouche pour lier des tissus,
la cartouche comprend une partie (266) qui est positionnée à l'opposé de l'orifice d'alimentation en gaz lorsque la cartouche est logée dans la chambre de stockage, et un élément de maintien de pression (260) qui entoure la partie (266) et qui est en contact avec la partie couvercle lorsque la partie couvercle ferme l'ouverture de la chambre de stockage, la cartouche est **caractérisée en ce que** :
ladite partie (266) est une partie de formation de trou traversant (266) dans laquelle un trou (66) peut être créé par une extrémité pointue d'un élément en forme d'aiguille (70) de l'appareil de liaison de tissus (1) pour alimenter en gaz la cartouche par l'orifice d'alimentation en gaz (49) ; dans laquelle une épaisseur de la partie de formation de trou de passage (266) est plus petite que sa périphérie.

6. Cartouche selon la revendication 5, comprenant en outre un matériau élastique prévu sur une surface de l'élément de maintien de pression qui est en contact avec la partie couvercle.

7. Cartouche selon la revendication 6, dans laquelle le matériau élastique est formé comme une partie saillante (261).
